# EUROPÄISCHE PATENTSCHRIFT

(11) **EP 4 297 982 B1**
(45) Veröffentlichungstag und Bekanntmachung des Hinweises auf die Patenterteilung: **02.04.2025**
(21) Anmeldenummer: 22712798.2
(22) Anmeldetag: 21.02.2022
(51) Int. Cl.: B60B 1/00, B60B 1/04

(54) **SPEICHENSTERN AUS EINEM FASER-KUNSTSTOFF-VERBUND**
SPOKE-STAR UNIT MADE OF A FIBRE-REINFORCED PLASTIC
ENSEMBLE RAYONS EN ÉTOILE FAIT D'UNE MATIÈRE PLASTIQUE RENFORCÉE PAR DES FIBRES

(30) Priorität: 26.02.2021 DE 102021104740
(43) Veröffentlichungstag der Anmeldung: 03.01.2024
(73) Patentinhaber: EVOLIME GMBH, 67251 Freinsheim (DE)
(72) Erfinder: BÜCKER, Marcel, 67655 Kaiserslautern (DE)
(74) Vertreter: Patentanwaltskanzlei Vièl & Wieske PartGmbB
(86) Internationale Anmeldenummer: PCT/DE2022/100134
(87) Internationale Veröffentlichungsnummer: WO 2022/179662

(56) Entgegenhaltungen:
- DE-A1- 102009 020 123
- DE-A1- 102017 116 754
- DE-A1- 102018 113 797
- DE-B3- 102008 046 255
- DE-U1- 20 022 351
- US-A1- 2007 138 859

## Beschreibung

Die vorliegende Erfindung betrifft einen Speichenstern aus einem Faser-Kunststoff-Verbund, welcher als ein geschlossener Ring in Sternform ausgebildet ist, wobei der Speichenstern mindestens zwei Speichen zwischen einem nabenseitigen Innenumfang des Speichensterns und einem felgenseitigen Außenumfang des Speichensterns aufweist, wobei in dem Speichenstern ein einziges Faserbündel mehrfach zwischen dem Innenumfang und dem Außenumfang entlang von Speichen des Speichensterns verläuft.

Ein Speichenstern ist ein zumindest näherungsweise sternförmiges Gebilde, dessen Strahlen durch Speichen gebildet werden. Ein Speichenstern weist mindestens zwei Speichen auf.

Speichenräder aus Faser-Verbundmaterial sind bekannt.

Im Stand der Technik sind Kraftfahrzeugfelgen aus Faser-Verbundmaterial bekannt, die Gussfelgen nachempfunden sind. Diesen wird ihre Form durch Fasermatten gegeben, die auf eine Formvorlage aufgebracht werden. Die getränkten Fasermatten werden ausgehärtet, um das Speichenrad herzustellen.

Nachteilig an diesem Stand der Technik ist, dass vorgeformte Formelemente benötigt werden, um der Felge ihre Form zu verleihen. Solche Formen sind relativ aufwendig herzustellen und entsprechend teuer. Darüber hinaus ermöglichen sie nur die Herstellung eines bestimmten Typs von Speichenrad in einer bestimmten Größe. Außerdem ist die Faserausnutzung in den bekannten Lösungen nicht optimal. Ein gattungsgemässes Speichenstern ist aus der DE102009020123A bekannt.

In der DE 10 2018 113 797 A1 wird ein Verfahren zum Herstellen eines Speichensterns mit einem oder mehreren Endlosfaserbündeln mittels einer Herstellvorrichtung beschrieben. Die Herstellvorrichtung weist mehrere felgenkranzseitige Umlenkeinrichtungen und mehrere nabenseitigen Umlenkeinrichtungen auf. Zum Formen des Felgensterns wird ein Endlosfaserbündel um zumindest einen Teil der felgenkranzseitigen Umlenkeinrichtungen herum ein Faserwickel gewickelt und ein Teil der felgenkranzseitigen Umlenkeinrichtungen in Richtung des Inneren der Anordnung verschoben.

Die DE 94 16 688 U1 beschreibt Naben für die Befestigung von Nippeln bei Laufrädern mit umgekehrt eingebauten Speichen. Dabei werden die Köpfe von ungekröpften Speichen in der Felge befestigt und die Speichen durch in der Nabe befindliche Nippel oder eine andere an der Nabe befindliche Vorrichtung gespannt. Dabei kann das felgenseitige Ende einer Speiche aus Faserverbundwerkstoffen in einem parallel zur Laufradebene liegenden Schlitz montiert sein und das felgenseitige Ende eine geschlossene oder zur Laufradachse hin offene Öse bilden. In dieser Öse befindet sich ein Haltestift, welcher ein Herausziehen der Speiche aufgrund der Zugkraft verhindert.

Die DE 10 2007 026 782 A1 betrifft eine Felge aus Faserverbundwerkstoff. Das Speichenende bzw. die Einzelenden der Speiche können schlaufig um ein Strukturelement der Felge geführt werden, wobei es sich dabei z.B. um einen Rovingabschnitt, eine in die Schlaufe greifende Vernähung oder/und ein bereits vorkonsolidiertes Strukturelement handeln kann.

In der DE 10 2008 007 722 A1 wird eine Radspeiche mit Zugspeiche beschrieben. Die Speichen bestehen aus einem Verbundmaterial und umfassen einen verjüngten Zugkörper, wobei der Körper einen Zwischenabschnitt und zwei Enden aufweist. Der Körper ist jenseits jedes Endes durch ein Befestigungssegment verlängert, wobei der Körper und die Befestigungssegmente durch einen Übergangsbereich verbunden sind. Die Speiche weist zumindest einen Abschnitt mit verstärktem Querschnitt auf der Oberfläche auf in Bezug zu dem Querschnitt des Zwischenabschnitts, wobei der Abschnitt mit verstärktem Querschnitt zumindest den Übergangsbereich zwischen dem Zugkörper und dem Einbaubefestigungssegment bedeckt. Das Befestigungselement kann als Sandwich zwischen zwei Lagen der Felge und so gegen die innere Wand der Felge aufgebracht werden.

Die DE 10 2008 046 255 B3 beschreibt eine Speiche aus Karbonfasern für ein Fahrradlaufrad mit einer an zumindest einem Ende ausgebildeten Öse, wobei die Öse durch Karbonfasern in zwei voneinander getrennte Öffnungsbereiche aufgeteilt ist. In die beiden Öffnungsbereiche ist jeweils ein Kern aus im Wesentlichen bzgl. solchen bei Spannung der Speichen wirkenden Kräften inkompressiblem Material eingesetzt. An dem anderen Ende der Speiche kann sich eine weitere Öse mit nur einem Öffnungsbereich befinden. Der Öffnungsbereich ist auf der einen Seite halbkreisförmig ausgeformt und auf der anderen Seite spitz zulaufend ausgeformt. Ein Spannblock mit einem Eingriffselement greift dabei in die Öse ein und fixiert diese an der Nabe.

Die DE 10 2017 116 754 A1 beschreibt ein Systemlaufrad mit Speichen auf Basis von Hochleistungsfaserstoffen. Dabei ist die Speiche mittels wenigstens eines Spannelements spannbar und der Querschnitt der Speiche im nichtgespannten Zustand quadratähnlich und im gespannten Zustand im Wesentlichen rund.

Die DE 10 2017 219 061 B4 betrifft ein Rad eines Fahrzeugs bestehend aus einer Felge zur Aufnahme eines Reifens des Rads und einer Nabe mit den die Felge verbindenden Speichen. Die Speichen bestehen aus einem Speichenabschnitt aus einem spritzgegossenen thermoplastischen Kunststoffmaterial, in den wenigstens ein Speichenverstärkungselement zumindest teilweise eingebettet ist, das zumindest teilweise aus faserverstärktem Kunststoff besteht. Eine felgenseitig aus der Speiche herausragende Schlaufe des Verstärkungselements ist radial außen um wenigstens einen Abschnitt des Felgenverstärkungselements herumgeführt.

Die EP 0 089 809 A1 beschreibt ein Verfahren zur Herstellung durch Harzspritzgießen von faserverstärkten Gegenständen aus faserigem Material, das in einem härtbaren Matrixmaterial gebunden ist. Die Gegenstände umfassen zwei oder mehr Speichen, die sich von einem Nabenabschnitt erstrecken. Jede Speiche hat die Form einer Schleife. Das Fasermaterial ist so angeordnet, dass mindestens so viele Rovings des Fasermaterials, wie es Speichen gibt, sich in kontinuierlichen Bahnen vom Nabenabschnitt um jede der Speichen herum anordnen. Jedes der Rovings überlappt zumindest auf einem Teil seiner Länge jedes der anderen Rovings.

Die DE 298 24 507 U1 betrifft eine Kompositspeichenseele für ein Rad mit Speichen, die auf Zug beansprucht werden. Die Kompositspeichenseele umfasst eine kontinuierliche Wicklung einer Vielzahl von Windungen einer Faser gemäß mindestens zweier paralleler, geradliniger Abschnitte, die an ihren Enden durch zwei gerundete Abschnitte vereinigt sind. Die geradlinigen Abschnitte können dabei zu einem einstückigen Strang vereinigt sein. Die Seele kann dabei in jedem Ende ein Befestigungsstück zur Verbindung mit der Felge und der Nabe aufweisen. Das Befestigungsstück besteht aus einem Bolzen oder einem Bolzenabschnitt, der an der Innenseite der kontinuierlichen Wicklung der Seele angreift.

Die EP 1 800 897 B1 beschreibt ein Rad umfassend eine Felge, eine Nabe und mindestens eine Verbindungsvorrichtung der Felge mit der Nabe. Die Verbindungsvorrichtung umfasst eine Verbundspeiche und ein erstes Verbindungsmittel der Speiche mit der Felge oder der Nabe, wobei die Speiche einen langgestreckten Körper umfasst, der sich entlang einer Längsrichtung zwischen einem ersten Ende und einem zweiten Ende erstreckt. Der Körper und die Enden umfassen Fasern, wobei die Fasern angeordnet sind, um eine erste Schlaufe am ersten Ende zu bilden. Das erste Verbindungsmittel umfasst ein in der ersten Schlaufe angeordnetes erstes Einsatzstück, eine an dem ersten Einsatzstück befestigte erste Stange, wobei die erste Stange entlang der Längsrichtung ausgerichtet ist, wobei ein erster Verschraubungsteil oder Befestigungsteil auf der ersten Stange definiert ist.

Die US 2008/0315675 A1 betrifft ein Rad bestehend aus einer Felge einer Nabe und mindestens einer Speiche, welche die Felge mit der Nabe verbindet. Die Speiche besteht aus einem Verbundwerkstoff, wobei jede Speiche ein Verbindungselement zum lösbaren Verbinden der Speiche mit der Nabe aufweist. Das Verbindungselement ist zumindest teilweise in die Speiche eingearbeitet, indem es mit der Speiche zusammengeformt wurde. Das Verbindungselement kann ein geschulterter Stift sein. Die Speiche kann eine Doppelspeiche sein.

Die WO 1991/013771 A2 beschreibt eine nicht starre Speiche, die ein sich zwischen einem ersten und einem zweiten Ende erstreckendes Mittelteil, ein erstes an einem ersten Ende der Speiche befestigtes Befestigungsmittel und ein zweites an dem anderen Ende der Speiche angeordnetes Befestigungsmittel umfasst. Dabei kann eines der genannten Befestigungsmittel einen Ösenhaken umfassen.

Die WO 2010/057857 A1 betrifft ein Rad, insbesondere für Fahrräder oder Motorräder, das eine Felge aufweist, die im Querschnitt eine polygonale Form, vorzugsweise eine V-Form, hat. Die Felge weist im inneren Bereich einen bogenförmigen Einsatz oder eine Führung auf, zur Auflage und zum Gleiten eines komplementär geformten Endes einer Speiche, die wie eine offene Schleife geformt ist. Die Enden der Speiche können an entsprechend vorgesehenen Öffnungen, die in der Felge in einem Bereich, der an die bogenförmige Führung oder den Einsatz angrenzt, angeordnet sind, eingesetzt werden.

Die DE 200 22 351 U1 offenbart eine Verbundspeiche für ein Speichenrad mit einem länglichen Mittelkörper und zwei Befestigungsenden aus in Harz eingebetteten Fasern. Die Fasern sind derart angeordnet, dass sie eine Schleife an mindestens einem der Befestigungsenden bilden, Wobei der Körper im Querschnitt vorbestimmte Dimensionen in einer an die Schleife angrenzenden Zone aufweist. Die Schleife ist dabei um einen Verdickungskern gebildet, welcher im Inneren der Schleife umschlossen ist, derart, dass die Schleife gefüllt und mindestens lokal, in einer Querrichtung, im Querschnitt eine Dimension größer als die Dimension der dem Körper benachbarten Zone aufweist.

Der vorliegenden Erfindung liegt die Aufgabe zugrunde, Speichensterne aus Faser-Kunststoff-Verbund zu optimieren.

Die Aufgabe wird bei einem Speichenstern gemäß dem Oberbegriff des Anspruchs 1 dadurch gelöst, dass die beiden Speichen der Doppelspeichen durch eine Kunststoffmatrix verbunden sind und die Speichenanordnung innerhalb des Speichensterns derjenigen von konventionellen Rädern mit Stahlspeichen nachempfunden ist, wobei der Speichenstern kontinuierlich als ein geschlossener Ring aus Faser-VerbundWerkstoff gefertigt ist wobei die Speichen an dem felgenseitigen Außenumfang des Speichensterns eine Schlaufe aufweisen und wobei die Speichen an dem nabenseitigen Innenumfang des Speichensterns eine Schlaufe aufweisen, wobei die Schlaufe am nabenseitigen Innenumfang des Speichensterns eine Befestigung des Speichensterns an auf der Nabe angeordneten Bolzen ermöglicht.

Ein Faserbündel ist bevorzugt ein Bündel aus mehreren Endlosfasern, beispielsweise ein Roving oder mehrere Rovings, die insbesondere unidirektionalen Faserverlauf aufweisen, oder ein Band, ein Towpreg, ein langgestrecktes Prepreg, oder ein langgestrecktes Gelege oder Gewebe. Eine Endlosfaser ist, wie im Sprachgebrauch in der Faserverbundwerkstofftechnik üblich, nicht tatsächlich unendlich lang. Eine Endlosfaser sei in dieser Patentanmeldung als eine Faser mit der speziellen Eigenschaft definiert, dass sie länger als eine Speiche ist. Es ist jedoch auch denkbar, Fasern, die kürzer als eine Speiche sind, zu einem längeren Faserbündel zu verbinden und zu verwenden.

Ein Speichenstern kann beispielsweise als ein Teil eines Speichenrades vorgesehen sein. Es kann der Verbindung einer Nabe mit einem Felgenkranz dienen. Vorzugsweise hat der Speichenstern eine ganzzahlige Anzahl von Speichen. Vorzugsweise weist der Speichenstern rotationssymmetrische Abschnitte auf, insbesondere jeweils zwei Speichen umfassende Abschnitte.

Eine Doppelspeiche wird durch zwei parallel verlaufende Speichen gebildet. Die Speichen verlaufen näherungsweise parallel von dem nabenseitigen Innenumfang des Speichensterns zu dem felgenseitigen Außenumfang des Speichensterns. Durch die Schlaufe am felgenseitigen Außenumfang des Speichensterns wird der Faserverlauf um 180° umgekehrt. Die Fasern verlaufen in den beiden Speichen der Doppelspeiche im Wesentlichen parallel und entgegengerichtet.

Der erfindungsgemäße Speichenstern kann im Nasswickelverfahren hergestellt werden. Vorteilhaft kann die Faserart und Kunststoffmatrix an die Erfordernisse des Speichensterns angepasst werden. Die beiden Speichen der Doppelspeichen können dabei schon während des Herstellungsprozesses des Speichensterns durch die Kunststoffmatrix verbunden werden.

Vorteilhaft sind die Fasern in den Speichen parallel angeordnet. Durch diese Anordnung der Fasern können die Steifigkeit und Festigkeit der Fasern optimal ausgenutzt werden. Auf diese Weise kann Material bei der Herstellung des Speichensterns eingespart werden, was zusätzlich vorteilhaft das Gewicht des Speichensterns reduziert. Nicht nur durch die Verwendung von Carbonfasern mit geringem spezifischem Gewicht, sondern auch durch einen möglichst effizienten Materialeinsatz werden somit die Ziele des Leichtbaus erreicht.

Der Speichenstern ist kontinuierlich als ein geschlossener Ring aus Faser-VerbundWerkstoff gefertigt. Vorteilhaft weist der Speichenstern keine offenen Faserbündel auf. Dies ermöglicht eine bessere Lastenübertragung innerhalb des Speichensterns.

Vorteilhaft kann der nabenseitige Innenumfang des Speichensterns und der felgenseitigen Außenumfang des Speichensterns Schlaufen zur Verbindung des Speichensterns mit der Nabe bzw. dem Felgenkranz aufweisen. Diese Schlaufen ermöglichen eine vorteilhafte Lastenübertragung. Die Schlaufen ermöglichen die Befestigung des Speichensterns an auf der Nabe angeordneten Bolzen, was weitere Befestigungselemente erübrigt und eine Gewichtseinsparung mit sich bringt.

Bei der Ausgestaltung des felgenseitigen Außenumfangs des Speichensterns als Schlaufen weisen die Schlaufen bevorzugt den halben Durchmesser der Doppelspeichen auf. Bevorzugt wird dadurch die Spannung bei gleicher Zugkraft reduziert.

Bevorzugt können die beiden Speichen der Doppelspeichen derart zusammengeführt werden, dass die Doppelspeichen in Fahrtrichtung den kleinsten Querschnitt aufweisen. Besonders bevorzugt sind die beiden Speichen der Doppelspeiche parallel und in Fahrtrichtung versetzt angeordnet. Vorteilhaft ermöglicht diese Anordnung der Speichen eine aerodynamische Form. Die Form der Doppelspeiche kann durch die Kavität des Formwerkzeugs im Herstellungsprozess des Speichensterns vorteilhaft modifiziert werden. Besonders vorteilhaft ist dadurch die Ausgestaltung der Doppelspeiche in einer elliptischen Form möglich. Diese ist aerodynamisch besonders vorteilhaft.

Die Speichenanordnung innerhalb des Speichensterns kann derjenigen von konventionellen Rädern mit Stahlspeichen nachempfunden werden. Dabei können die von Stahlspeichen bekannten Lastenübertragungsprinzipien dieser Speichenanordnung zugrunde gelegt werden. Vorteilhaft müssen keine neuen Berechnungen, Simulationen und Versuche zur Lastenübertragung in den Speichen durchgeführt werden. Es kann auf Erfahrungen mit konventionellen Felgen zurückgegriffen werden.

Vorteilhaft wird durch den erfindungsgemäßen Speichenstern die Montage vereinfacht. Dabei können pro Nabenflanschseite zwei zueinander verdrehte identische Speichensterne auf die Nabe gesteckt werden. Dabei können die Speichensterne am nabenseitigen Innenumfang des Speichensterns mittels Schlaufen an Bolzen der Nabe fixiert werden. Die Verbindung erfolgt dabei bevorzugt formschlüssig. Vorteilhaft zeigt der felgenseitige Außenumfang des Speichensterns mit den am felgenseitigen Ende der Doppelspeichen befindlichen Schlaufe direkt in Richtung der Felgenlöcher des Felgenkranzes zur Befestigung und Spannen des Speichensterns an den Felgenkranz. Besonders vorteilhaft kann über das Spannen des Speichensterns der Höhen- und Seitenschlag sowie die Zentrierung des Speichenrades eingestellt werden.

Besonders bevorzugt ermöglicht der erfindungsgemäße Speichenstern einen besonders einfachen und schnellen Austausch von beschädigten Speichensternen. So kann bei einem beschädigten Speichenstern nur dieser anstelle des gesamten Speichenrades ausgetauscht werden. Dies reduziert die Reparaturkosten und ermöglicht eine ressourcenschonende Reparatur.

Eine bevorzugte Ausgestaltung der Erfindung besteht darin, dass mindestens eine Speiche an ihrer Schlaufe ein Befestigungsmittel aufweist.

Das Befestigungsmittel dient der Befestigung des Speichensterns an dem Felgenkranz. Das Befestigungsmittel kann in die Schlaufe des Speichensterns eingesetzt werden.

Das Befestigungsmittel kann lösbar mit dem Felgenkranz verbunden werden.

Dabei ist es zweckmäßig, dass das Befestigungsmittel formschlüssig mit der Schlaufe verbindbar ist.

Besonders vorzugsweise kann die Verbindung zwischen Speichenstern und Befestigungsmittel formschlüssig erfolgen. Ein Verkleben des Befestigungsmittels ist nicht notwendig.

Eine Ausgestaltung der Erfindung besteht darin, das Befestigungsmittel mittels einer Schraube an einem Felgenkranz fixierbar ist.

Die Schraube ermöglicht eine besonders einfache, schnelle und sichere Verbindung des Befestigungsmittels an dem Felgenkranz. Vorteilhaft kann über die Schraube der Speichenstern vorgespannt werden. Durch das Spannen des Speichensterns könnender Höhen- und Seitenschlag sowie die Zentrierung des Speichenrades eingestellt werden.

Die Schraube kann als Schraube mit Kugelkopf ausgestaltet sein.

Dabei ist es zweckmäßig, dass die Schraube mit der Speiche fluchtet.

Dazu kann die Schlaufe leicht aus der Ebene herausgebogen sein. Vorteilhaft wird die Schlaufe zusätzlich durch die Schraube durch Formschluss in dem Befestigungsmittel gesichert. Vorteilhaft wird ein "Rausspringen" der Schlaufe aus dem Befestigungsmittel durch die Schraube verhindert.

Das Befestigungsmittel verhindert auch das "Aufziehen" der Schlaufe. Dies wird durch die seitliche Stützung des Schlaufenauslaufes durch die "Backen" des Befestigungsmittels erreicht.

Vorteilhaft werden Biegemomente auf den Speichenstern verhindert. Besonders vorteilhaft wird die Lastenübertragung zwischen dem Speichenstern und dem Felgenkranz optimiert.

Schließlich wird in einem weiteren Aspekt der Erfindung ein Speichenrad mit einer Nabe, einem Felgenkranz und mehreren Speichen zwischen der Nabe und dem Felgenkranz vorgeschlagen. Das Speichenrad umfasst einen Speichenstern gemäß einer der vorstehenden Ausführungsformen.

Ein Speichenstern kann an einem Felgenkranz und an einer Nabe befestigt werden, sodass daraus ein Speichenrad gebildet wird. Die Befestigung des Speichensterns an der Nabe kann dabei über Schlaufen des Speichensterns erfolgen, die in Bolzen an der Nabe eingehängt werden. Die Befestigung des Speichensterns an dem Felgenkranz kann mittels des erfindungsgemäßen Befestigungsmittels erfolgen.

In den Figuren sind beispielhafte Ausführungsformen der Erfindung beschrieben.

Es zeigen:
- Fig. 1: eine Seitenansicht eines einzelnen erfindungsgemäßen Speichensterns,
- Fig. 2: eine Seitenansicht einer Anordnung zweier erfindungsgemäßer Speichensterne aus Fig. 1,
- Fig. 3: eine Draufsichtsicht eines Paares der Anordnung aus Fig. 2,
- Fig. 4: eine Seitenansicht des felgenseitigen Außenumfang des erfindungsgemäßen Speichensterns,
- Fig. 5: eine Seitenansicht des nabenseitigen Innenumfangs der Anordnung aus Fig. 2 mit einer Nabe,
- Fig. 6: eine Seitenansicht des nabenseitigen Innenumfangs des Speichensterns aus Fig. 1 mit einer Nabe,
- Fig. 7: eine perspektivische Ansicht des felgenseitigen Außenumfangs des erfindungsgemäßen Speichensterns mit Befestigungsmittel,
- Fig. 8: eine Seitenansicht des felgenseitigen Außenumfangs des Speichensterns mit Befestigungsmittel aus Fig. 7,
- Fig. 9: eine Seitenansicht des felgenseitigen Außenumfang des Speichensterns mit Befestigungsmittel aus Fig. 7 im an einen Felgenkranz montierten Zustand,
- Fig. 10 Fig. 11,: eine Seitenansicht einer erfindungsgemäßen Nabe,
- 11a und 11b: perspektivische Ansichten einer erfindungsgemäßen Nabe vor Befestigung des Speichensterns, mit einem ersten montierten Speichenstern und mit einem zweiten montierten Speichenstern.

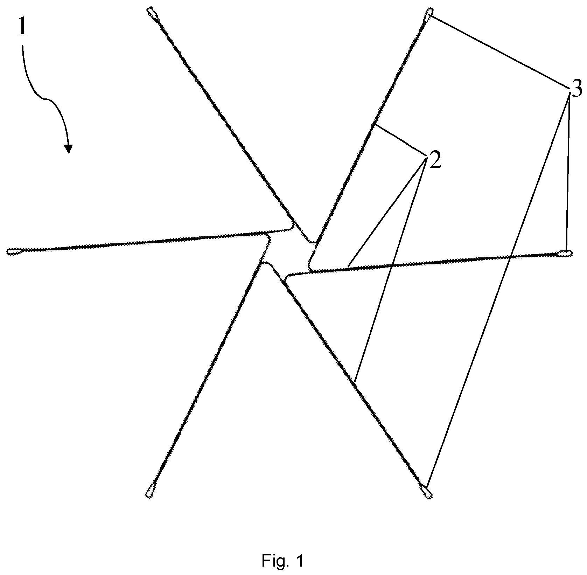

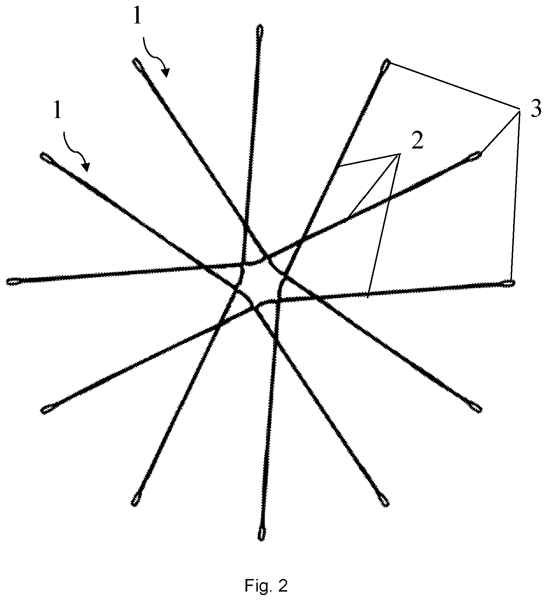

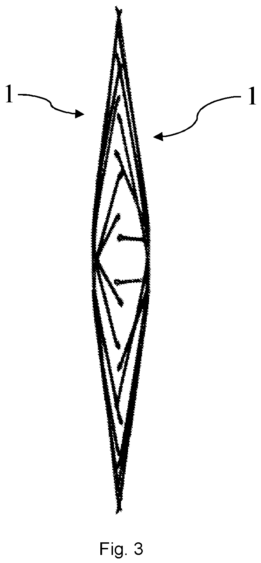

Die Figuren 1 bis 3 zeigen schematisch eine Ausführungsform des erfindungsgemäßen Speichensterns 1. In Figur 1 ist ein einzelner Speichenstern 1 dargestellt. In Figur 2 ist eine Anordnung von zwei Speichensternen 1 aus Figur 1 dargestellt. Die Speichensterne 1 sind um 180° gegeneinander verdreht. Die Anordnung kann eine Seite eines Speichenrades bilden. In Figur 3 sind zwei Anordnungen aus Figur 2 dargestellt. Die beiden Anordnungen sind leicht gegeneinander verdreht und bilden die beiden Seiten der Speichen eines Speichenrades.

Der Speichenstern 1 besteht aus einem Faser-Kunststoff-Verbundwerkstoff. Der Speichenstern 1 weist Speichen 2 zwischen einem nabenseitigen Innenumfang des Speichensterns und einem felgenseitigen Außenumfang des Speichensterns auf. In dem Speichenstern 1 verläuft ein einziges Faserbündel mehrfach zwischen dem Innenumfang und dem Außenumfang entlang von Speichen 2 des Speichensterns. Die Speichen 2 sind als Doppelspeichen ausgebildet. Eine Doppelspeiche wird durch zwei parallel verlaufende Speichen 2 gebildet. Die Speichen 2 verlaufen näherungsweise parallel von dem nabenseitigen Innenumfang des Speichensterns zu dem felgenseitigen Außenumfang des Speichensterns. Die Speichen 2 weisen an dem felgenseitigen Außenumfang des Speichensterns eine Schlaufe 3 auf. Durch die Schlaufe 3 am felgenseitigen Außenumfang des Speichensterns wird der Faserverlauf um 180° umgekehrt. Die Fasern verlaufen in den beiden Speichen 2 der Doppelspeiche im Wesentlichen parallel und entgegengerichtet. Am nabenseitigen Innenumfang des Speichensterns sind Schlaufen zum formschlüssigen Verbinden des Speichensterns an einer Nabe 7 vorgesehen.

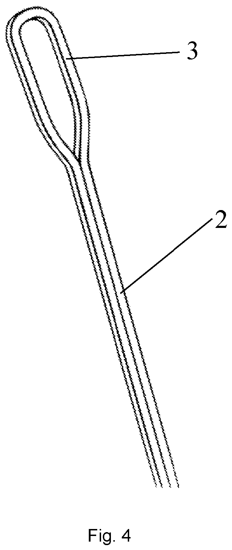

Fig. 4 zeigt eine Detailansicht des felgenseitigen Außenumfangs eines erfindungsgemäßen Speichensterns 1. Die Doppelspeichen 2 weisen an dem felgenseitigen Außenumfang des Speichensterns eine Schlaufe 3 auf. Durch die Schlaufe 3 am felgenseitigen Außenumfang des Speichensterns wird der Faserverlauf um 180° umgekehrt. Die Fasern verlaufen in den beiden Speichen 2 der Doppelspeiche im Wesentlichen parallel und entgegengerichtet. Durch die Ausgestaltung des felgenseitigen Außenumfang des Speichensterns als Schlaufen weisen die Schlaufen 3 den halben Durchmesser der Doppelspeichen 2 auf.

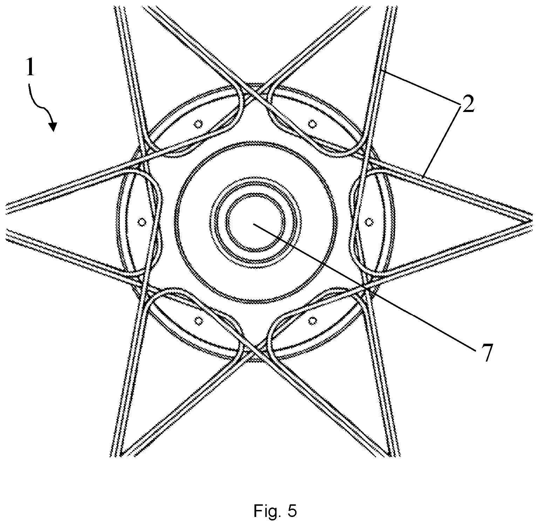

In Figur 5 ist eine Detailansicht des nabenseitigen Innenumfangs der Anordnung aus Figur 2 dargestellt. Durch die Schlaufen an dem nabenseitigen Innumfang des Speichensterns lässt sich der Speichenstern formschlüssig mit einer Nabe 7 verbinden.

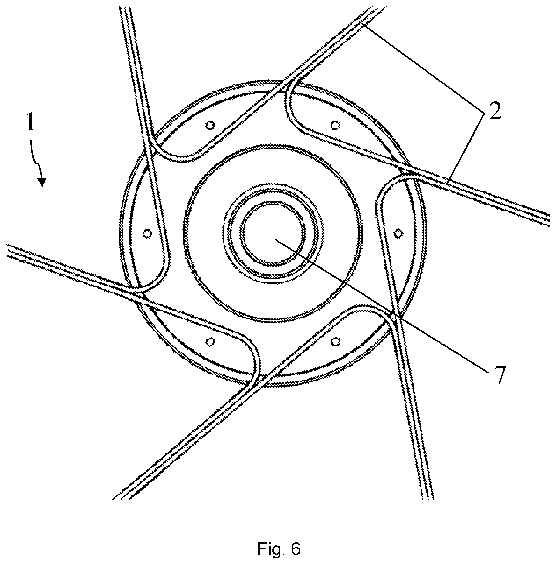

In Figur 6 ist eine Detailansicht des nabenseitigen Innenumfangs des einzelnen Speichensterns 1 aus Figur 1 dargestellt. Durch die Schlaufen an dem nabenseitigen Innumfang des Speichensterns lässt sich der Speichenstern formschlüssig mit einer Nabe 7 verbinden.

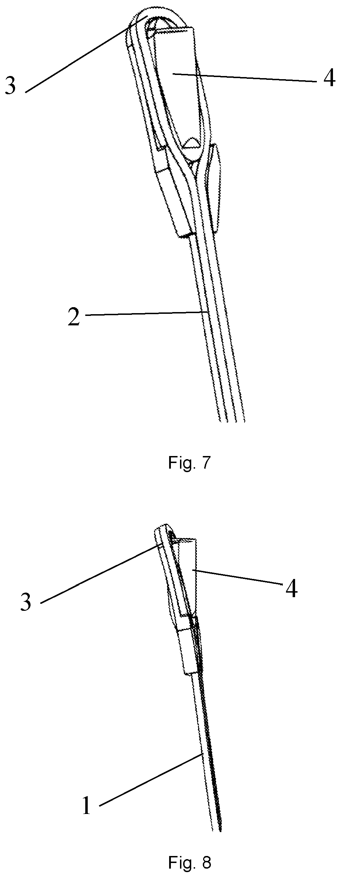

Die Figuren 7 und 8 zeigen eine schematische Darstellung eines erfindungsgemäßen Speichensterns 1 mit Befestigungsmittel 4. Das Befestigungsmittel 4 ist in die am felgenseitige Außenumfang des Speichensterns befindlichen Schlaufe 3 eingesetzt. Auf diese Weise ist das Befestigungsmittel 4 formschlüssig mit dem Speichenstern 1 verbunden. Das Befestigungsmittel 4 kann mit einer Schraube 5 mit einem Felgenkranz 6 verbunden werden. Wie in Fig. 8 zu sehen ist, ist die Schlaufe 3 leicht aus der Ebene herausgebogen. Dadurch kann die Schlaufe 3 im montierten Zustand des Speichensterns 1 zusätzlich durch eine Schraube 5 durch Formschluss in dem Befestigungsmittel 4 gesichert werden. Vorteilhaft wird ein "Rausspringen" der Schlaufe 3 aus dem Befestigungsmittel 4 durch die Schraube 5 verhindert.

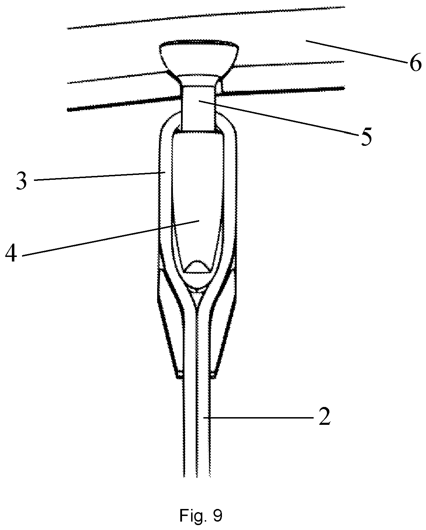

In Fig. 9 ist eine Darstellung des Speichensterns1 mit Befestigungsmittel 4 aus den Figuren 7 und 8 im montierten Zustand an einem Felgenkranz 6 dargestellt. Das Befestigungsmittel 4 wird mit einer Schraube 5 an dem Felgenkranz 6 befestigt. Die Schraube 5 verhindert dabei zusätzlich ein Rausspringen der Schlaufe 3 aus dem Befestigungsmittel 4 durch Formschluss. Dabei fluchtet die Schraube 5 mit der Doppelspeiche 2.

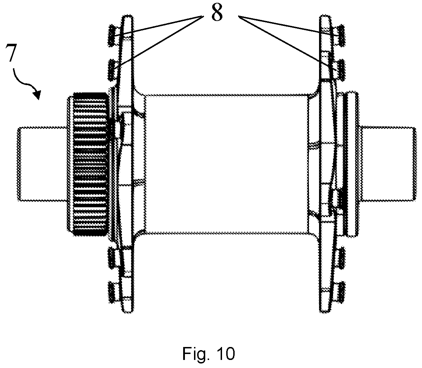

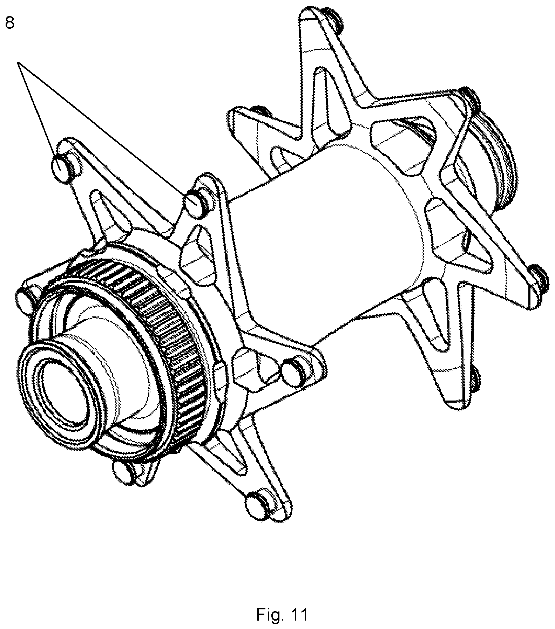

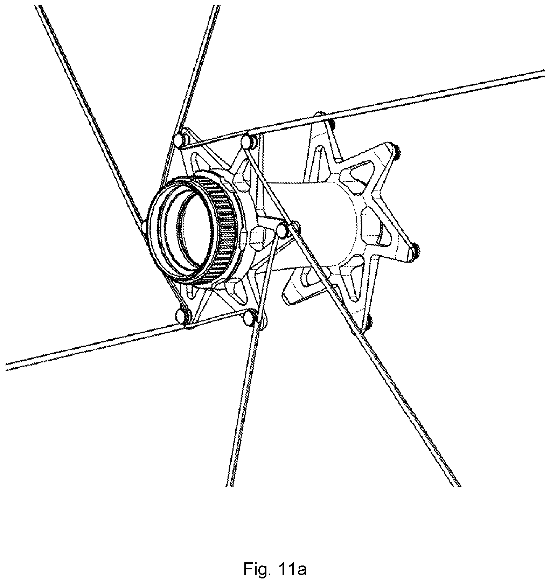

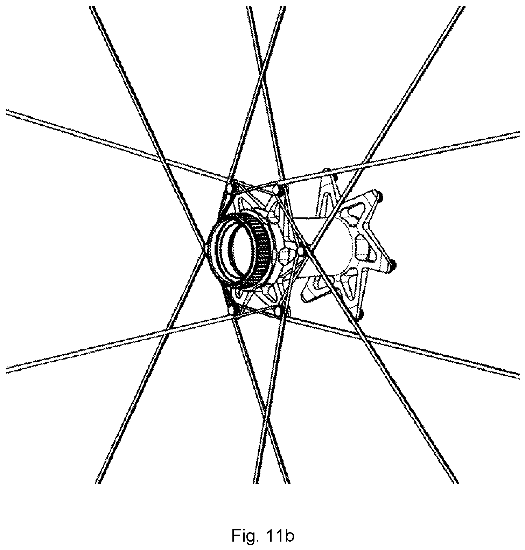

Die Figuren 10 und 11 zeigen schematisch eine Ausgestaltung einer Nabe 7 eines Speichenrades mit einem erfindungsgemäßen Speichenstern 1. Die Nabe 7 weist Bolzen 8 zur formschlüssigen Verbindung des Speichensterns 1 mit der Nabe 7 auf, in die die Schlaufen 3 des Speichensterns 1 eingreifen.

Die Bolzen 8 greifen dabei im montierten Zustand in Schlaufen am nabenseitigen Innenumfang des Speichensterns 1 ein. Die Fig. 11a und 11b zeigen, wie zunächst ein erster Speichenstern 1 durch Eingriff der Bolzen 8 in Schlaufen 3 am nabenseitigen Innenumfang des Speichensterns 1 befestigt wird und dann - um 180° dazu versetzt - ein zweiter Speichenstern 2.

## Patentansprüche

1. Speichenstern (1) aus einem Faser-Kunststoff-Verbund, welcher als ein geschlossener Ring in Sternform ausgebildet ist, , wobei der Speichenstern (1) mindestens zwei Speichen (2) zwischen einem nabenseitigen Innenumfang des Speichensterns und einem felgenseitigen Außenumfang des Speichensterns aufweist, wobei in dem Speichenstern ein einziges Faserbündel mehrfach zwischen dem Innenumfang und dem Außenumfang entlang von Speichen (2) des Speichensterns verläuft, wobei die Speichen (2) als Doppelspeichen ausgebildet sind, **dadurch gekennzeichnet, dass** die beiden Speichen (2) der Doppelspeichen durch eine Kunststoffmatrix verbunden sind und die Speichenanordnung innerhalb des Speichensterns (1) derjenigen von konventionellen Rädern mit Stahlspeichen nachempfunden ist, wobei der Speichenstern (1) kontinuierlich als ein geschlossener Ring aus Faser-VerbundWerkstoff gefertigt ist, wobei die Speichen (2) an dem felgenseitigen Außenumfang des Speichensterns eine Schlaufe (3) aufweisen und wobei die Speichen (2) an dem nabenseitigen Innenumfang des Speichensterns eine Schlaufe aufweisen, wobei die Schlaufe am nabenseitigen Innenumfang des Speichensterns eine Befestigung des Speichensterns an auf der Nabe angeordneten Bolzen ermöglicht.

2. Speichenstern (1) gemäß Anspruch 1, **dadurch gekennzeichnet, dass** mindestens eine Speiche (2) an ihrer Schlaufe (3) ein Befestigungsmittel (4) aufweist.

3. Speichenstern (1) gemäß Anspruch 2, **dadurch gekennzeichnet, dass** das Befestigungsmittel (4) formschlüssig mit der Schlaufe (3) verbindbar ist.

4. Speichenstern (1) gemäß einem der Ansprüche 2 oder 3, **dadurch gekennzeichnet, dass** das Befestigungsmittel (4) mittels einer Schraube (5) an einem Felgenkranz (6) fixierbar ist.

5. Speichenstern (1) gemäß Anspruch 4, **dadurch gekennzeichnet, dass** die Schraube (5) mit der Speiche (2) fluchtet.

6. Speichenrad mit einer Nabe (7), einem Felgenkranz (6) und mehreren Speichen (2) zwischen der Nabe (7) und dem Felgenkranz (6), **dadurch gekennzeichnet, dass** das Speichenrad mindestens einen Speichenstern (1) nach einem der vorangegangenen Ansprüche umfasst.

## Claims

1. Spoke-star unit (1) that is made of a fibre-reinforced plastics composite and is formed as a star-shaped closed ring, wherein the spoke-star unit (1) comprises at least two spokes (2) between a hub-side inner circumference of the spoke-star unit and a rim-side outer circumference of the spoke-star unit, wherein a single fibre bundle extends repeatedly in the spoke-star unit between the inner circumference and the outer circumference along spokes (2) of the spoke-star unit, wherein the spokes (2) are designed in the form of double spokes, **characterised in that** the two spokes (2) of the double spokes are connected by a plastics matrix and the spoke arrangement within the spoke-star unit (1) is modelled on that of conventional wheels comprising steel spokes, wherein the spoke-star unit (1) is manufactured continuously as a closed ring made of fibre-composite material, wherein the spokes (2) on the rim-side outer circumference of the spoke-star unit comprise a loop (3) and wherein the spokes (2) on the hub-side inner circumference of the spoke-star unit comprise a loop, wherein the loop on the hub-side inner circumference of the spoke-star unit allows the spoke-star unit to be fastened to bolts arranged on the hub.

2. Spoke-star unit (1) according to claim 1, **characterised in that** at least one spoke (2) comprises a fastening means (4) on its loop (3).

3. Spoke-star unit (1) according to claim 2, **characterised in that** the fastening means (4) is interlockingly connectable to the loop (3).

4. Spoke-star unit (1) according to any of claims 2 or 3, **characterised in that** the fastening means (4) can be fixed to a wheel rim (6) by means of a screw (5).

5. Spoke-star unit (1) according to claim 4, **characterised in that** the screw (5) aligns with the spoke (2).

6. Spoked wheel comprising a hub (7), a wheel rim (6) and a plurality of spokes (2) between the hub (7) and the wheel rim (6), **characterised in that** the spoked wheel comprises at least one spoke-star unit (1) according to any of the preceding claims.

## Revendications

1. Étoile à rayons (1) en un composite de fibres et de matière plastique, qui est réalisée sous la forme d'un anneau fermé en forme d'étoile, l'étoile à rayons (1) étant munie d'au moins deux rayons (2) entre une circonférence intérieure côté moyeu de l'étoile à rayons et une circonférence extérieure côté jante de l'étoile à rayons, un seul faisceau de fibres s'étendant plusieurs fois dans l'étoile à rayons entre la circonférence intérieure et la circonférence extérieure le long de rayons (2) de l'étoile à rayons, les rayons (2) étant réalisés sous la forme de rayons doubles,
**caractérisée en ce que**
les deux rayons (2) des rayons double sont reliés par une matrice en matière plastique, et la disposition des rayons à l'intérieur de l'étoile à rayons (1) est calquée sur celle des roues conventionnelles à rayons en acier, l'étoile à rayons (1) étant fabriquée de façon continue sous la forme d'un anneau fermé en matériau composite à base de fibres, les rayons (2) étant munis d'une boucle (3) sur la circonférence extérieure de l'étoile à rayons du côté de la jante, et les rayons (2) étant munis d'une boucle sur la circonférence intérieure de l'étoile à rayons du côté du moyeu, la boucle sur la circonférence intérieure de l'étoile à rayons du côté du moyeu permettant de fixer l'étoile à rayons à des boulons disposés sur le moyeu.

2. Étoile à rayons (1) selon la revendication 1, **caractérisée en ce qu'**au moins un rayon (2) est muni d'un moyen de fixation (4) au niveau de sa boucle (3).

3. Étoile à rayons (1) selon la revendication 2, **caractérisée en ce que** le moyen de fixation (4) peut être relié par complémentarité de forme à la boucle (3).

4. Étoile à rayons (1) selon l'une des revendications 2 ou 3, **caractérisée en ce que** le moyen de fixation (4) peut être fixé à une couronne de jante (6) au moyen d'une vis (5).

5. Étoile à rayons (1) selon la revendication 4, **caractérisée en ce que** la vis (5) est alignée avec le rayon (2).

6. Roue à rayons comprenant un moyeu (7), une couronne de jante (6) et plusieurs rayons (2) entre le moyeu (7) et la jante (6), **caractérisée en ce que** la roue à rayons comprend au moins une étoile à rayons (1) selon l'une des revendications précédentes.
